# EUROPÄISCHE PATENTANMELDUNG

(11) **EP 2 482 001 A1**
(43) Veröffentlichungstag der Anmeldung: **01.08.2012**
(21) Anmeldenummer: 11152016.9
(22) Anmeldetag: 25.01.2011
(51) Int. Cl.: F24J 2/10, C09J 5/00

(54) **Klebeverfahren zur Herstellung von optischen Spiegeln**

(71) Anmelder: Novatec Solar GmbH, 76133 Karlsruhe (DE)
(72) Erfinder: Müller, Klaus-Dieter, 76337 Waldbronn (DE); Mertins, Max, 79104 Freiburg (DE)
(74) Vertreter: Geitz Truckenmüller Lucht

(57) **Zusammenfassung**

Die Erfindung betrifft ein Klebeverfahren zur Herstellung von optischen Spiegeln, bei welchem eine verwindungssteife Trägerstruktur (10) eine Kontaktseite (12) aufweist, welche unter Zwischenlage eines thixotropen Klebemittels mit wenigstens einer auf eine Sollform (21) aufgezogenen Spiegelplatte (20) zusammengefügt wird, wobei die Sollform (21) von der wenigstens einen Spiegelplatte (20) gelöst wird, nachdem das Klebemittel erhärtet ist, und wobei während des Zusammenfügens der wenigstens einen Spiegelplatte (20) mit der Kontaktseite (12) der Trägerstruktur (10) die auf die Sollform (21) aufgezogene Spiegelplatte (20) oder die Trägerstruktur (10) in mechanische Schwingung (40) versetzt wird, welche Schwingung (40) zumindest eine zur Ebene der Kontaktseite (12) parallele Richtungskomponente aufweist.

## Beschreibung

Die vorliegende Erfindung betrifft ein Klebeverfahren zur Herstellung von optischen Spiegeln, bei welchem eine verwindungssteife Trägerstruktur eine Kontaktseite aufweist, welche unter Zwischenlage eines thixotropen Klebemittels mit wenigstens einer auf eine Sollform aufgezogenen Spiegelplatte zusammengefügt wird, wobei die Sollform von der wenigstens einen Spiegelplatte gelöst wird, nachdem das Klebemittel erhärtet ist.

Ein derartiges Klebeverfahren ist bereits aus der europäischen Patentanmeldung EP 1 764 565 A1 vorbekannt. Im Rahmen dieser europäischen Offenlegungsschrift wird gelehrt, dass auf eine feste Trägerstruktur Klebemittel appliziert wird, in welches hinein eine auf eine Sollform aufgezogene, gekrümmte Spiegelscheibe gedrückt wird. Die Sollform, welche die gewünschte Form der Spiegelscheibe vorgibt, verbleibt hierbei an der Spiegelscheibe, bis der Klebstoff ausgehärtet ist und so die Spiegelplatte ihre angestrebte Form behält.

Zwischen der Spiegelplatte und der Trägerstruktur wird dabei ein thixotropes Klebemittel verwendet. Ein derartiges thixotropes Klebemittel ist ein nicht newtonsches Fluid, welches also bei einem Auftragen des Klebemittels auf die Trägerstruktur nicht wie Wasser zerläuft sondern vielmehr in der Art von Knetmasse oder dergleichen seine Form behält. Diese Eigenschaft ist notwendig, um zunächst das Klebemittel in Form von Kleberaupen auf der Kontaktfläche aufzubringen und ferner dafür zu sorgen, dass das erhärtete Klebemittel die Spiegelplatte in der gewünschten Lage halten kann bzw. dass auf diese Art und Weise die Spiegelplatte in das volle Klebemittel hinein auf der Trägerstruktur appliziert werden kann.

Drückt man jedoch wiederum die Spiegelplatte in das volle Klebemittel hinein, so erfährt man vonseiten des Klebemittels einen Gegendruck, welcher dazu führt, dass der Vorgang des Zusammenfügens bei der Konstruktion eines optischen Spiegels relativ lange Zeit in Anspruch nimmt. Zudem entwickelt das Klebemittel hierbei relativ große Rückstellkräfte, welche das Anstreben einer gewünschten Form der Spiegelplatte zusätzl1ich erschwert, da es die Trägerstruktur verziehen kann.

Seit langem bekannt ist im Hinblick auf die Verwendung von thixotropen Klebemitteln deren Einsatz auf dem fachfremden Gebiet der Platinenbestückung mit elektronischen Bauelementen, wo beispielsweise gemäß der Offenlegungsschrift DE 26 27 178 B1 gelehrt wird, mithilfe eines Stempels oder durch Eintauchen des Bauelements in einen Vorratsbehälter mit dem Klebemittel dieses auf das Bauelement zu applizieren und das Bauelement dann in schwingenden Bewegungen auf der Platine aufzukleben. Derartige schwingende Bewegungen sorgen bei einem thixotropen Klebemittel dafür, dass aufgrund der sich einstellenden Scherspannungen eine Verflüssigung des Klebemittels eintritt. Aufgrund dieser Verflüssigung des Klebemittels, welcher eine typische Eigenschaft der thixotropen Klebemittel ist, vereinfacht sich das Andrücken des Bauelementes an die Platine und es erfolgt eine gleichmäßige Verteilung des Klebemittels zwischen den zusammengefügten Bauelementen.

Allerdings ist eine derartige Technik nicht auf die Montage optischer Spiegel übertragbar, da aufgrund der erforderlichen Hin- und Herbewegung und der vollständigen Verflüssigung des Klebemittels eine Modellierung der gekrümmten Spiegelscheibe in dieses Klebemittel hinein nach der Lehre der genannten deutschen Offenlegungsschrift undurchführbar erscheint. Weder soll eine solche vollständige Verflüssigung des Klebemittels eintreten, welche das Wegfallen der Stützen für die Krümmung der Spiegelplatte bedeuten würde, noch würde ein Hin- und Herbewegen des Greifarms, welcher die Sollform an die Trägerstruktur heranführt das gewünschte Ergebnis bringen, da zum einen eine koordinierte Bewegung des Greifarms in den erforderlichen Größenordnungen nicht möglich ist, und zum anderen die möglichen Seitwärtsbewegungen des Greifarms das Klebemittel zu gleichmäßig und zu eben auf der Trägerstruktur verteilen würde.

Vor diesem Hintergrund liegt der vorliegenden Erfindung die Aufgabe zu Grunde, ein Klebeverfahren zur Herstellung von optischen Spiegeln bereitzustellen, welches bestehende Herstellungsverfahren verbessert und beschleunigt.

Dies gelingt durch ein Klebeverfahren gemäß den Merkmalen des Hauptanspruchs. Weitere sinnvolle Ausgestaltungen dieses Verfahrens können den Unteransprüchen entnommen werden.

Erfindungsgemäß ist im Verfahren zunächst vorgesehen, dass auf eine Trägerstruktur ein Klebemittel appliziert wird. Eine auf eine Sollform aufgezogene Spiegelplatte wird dann an die Trägerstruktur herangeführt und auf dieser abgesetzt. Anschließend wird entweder die Trägerstruktur oder aber die Spiegelplatte in eine mechanische Schwingung versetzt, wobei diese Schwingung eine Scherspannung in dem thixotropen Klebemittel bewirkt. Dies erfolgt dadurch, dass sich die Bewegung in Scherrichtung, also in der Richtung der Ebene der mit der Spiegelplatte zu verklebenden Seite der Trägerstruktur, also der Kontaktseite der Trägerstruktur, abspielt.

Aufgrund des Umstandes, dass die gekrümmte Spiegelplatte mit ihrer Sollform auf der Trägerstruktur, unter Zwischenlage des thixotropen Klebemittels, aufgesetzt ist, wirkt der jeweils nicht in Schwingung versetzte Teil gegenüber dem in Schwingung versetzten Teil als träge Masse, so dass zwischen dem schwingenden und dem nicht schwingenden Teil eine Scherspannung in dem Klebemittel entsteht. Die angelegten Schwingungen werden jedoch in einem Maß angelegt, dass keine räumliche Verschiebung der aufeinander gesetzten Bestandteile erfolgt. Vielmehr wird sich lediglich der jeweils druckbeanspruchte und damit auch eine Scherbeanspruchung aufnehmende Teil des thixotropen Klebemittels teilweise verflüssigen, so dass eine weitgehend exakte Abbildung der gekrümmten Spiegelscheibe in das Klebemittel übertragen wird.

Nach dem Aussetzen der Schwingung verfestigt sich das thixotrope Klebemittel wieder und die ursprünglichen Eigenschaften treten wieder ein. Schließlich erhärtet das Klebemittel vollständig, wenngleich teilweise unter Erhalt eines Restes an Elastizität. Nach dem Erhärten des Klebemittels wird die Sollform von der Spiegelplatte entfernt.

Aufgrund dieses Verfahrens ist es folglich möglich, aufgrund des niedrigeren, anzusetzenden Drucks den Vorgang des Zusammenfügens von Spiegelplatte und Trägerstruktur deutlich schneller durchzuführen, wobei gleichzeitig aufgrund der teilweisen Oberflächenverflüssigung des Klebemittels sich dieses besser mit den Oberflächen verbindet und sich über einen größeren Anteil der Oberfläche verteilt.

Neben der Möglichkeit, lediglich eine der beiden aufeinander treffenden, zu verklebenden Teile in Schwingung zu versetzen, also die Spiegelplatte oder die Trägerstruktur, ist es auch möglich, beide in Schwingungen zu versetzen. In diesem Falle sollte die Schwingung logischerweise gegensinnig angelegt werden, wobei es wiederum ausreicht, einen gegensinnigen Geschwindigkeitsanteil in der Schwingung zu haben. Idealerweise wird eine jeweils exakt entgegengerichtete Schwingung angelegt, welche beispielsweise bei einer Oszillation durch eine um eine halbe Periodendauer versetzte Oszillation des jeweiligen Gegenstücks erreicht werden kann. Die Ganghöhe kann in diesem Fall aufgrund der Aufsummierung der jeweils vorgenommenen Amplituden halbiert werden.

In einem besonders bevorzugten Fall wird mit einer Frequenz von 40 Hz und einer Amplitude von zumindest näherungsweise 300 µm gearbeitet, wobei die Amplitude im Falle einander entgegenwirkender, gegensinniger Schwingungen beider miteinander verklebter Strukturteile halbiert wird, also 150 µm beträgt.

Derartige optische Spiegel können beispielsweise in einem solarthermischen Kraftwerk zum Einsatz kommen. Derartige solarthermische Kraftwerke weisen ein erhöht gelagertes Absorberrohr auf, auf welches das einfallende Sonnenlicht mithilfe längs erstreckter Reihen von optischen Spiegeln geleitet wird. Hierbei muss je nach Abstand des verwendeten optischen Spiegels von dem Absorberrohr dessen Öffnungswinkel angepasst werden, so dass jede einzelne Reihe unterschiedliche Spiegelkrümmungen benötigt. Es erscheint daher sinnvoll, die Kontaktseite der Trägerstruktur zumindest näherungsweise vollständig plan auszubilden, so dass unabhängig von einer etwaigen Krümmung der Kontaktseite der Trägerstruktur eine Anpassung des entstehenden optischen Spiegels an die Krümmungsbedürfnisse erfolgen kann. Mit ein und derselben Trägerstruktur kann auf diese Art und Weise jeder Spiegel eines solarthermischen Kraftwerks hergestellt werden, wobei bei den unterschiedlichen Spiegelkrümmungen lediglich unterschiedliche Sollformen zum Aufziehen der Spiegelplatten ihren Einsatz finden.

Durch die Vorgabe der angestrebten Spiegelform aufgrund der Krümmung der Sollform kann die weitere Einstellung der gekrümmten Spiegel bei der Montage desselben etwa in einem solarthermischen Kraftwerk entfallen. Die Formtreue dieser Anordnung ermöglicht einen Betrieb, bei dem die optischen Spiegel nicht nochmals nachjustiert werden müssen. Voraussetzung hierfür ist jedoch, dass eine Verbindung der Gesamtkonstruktion vermieden wird, dass es sich also um eine starre Trägerkonstruktion handelt. Zu diesem Zwecke ist die Trägerkonstruktion vorzugsweise kastenförmig gebildet, wobei mit besonderem Vorteil der Kasten einen trapezförmigen Querschnitt aufweist. Geringfügige Abweichungen des Querschnitts von der exakten Trapezform sind hierbei durchaus mit abgedeckt. Ein derartiger Kasten kann etwa aus Stahlblech oder Aluminiumblech hergestellt sein, eine Herstellung auch aus anderen Materialien ist jedoch denkbar.

Um bei der Verklebung eine direkte Kontaktierung der Spiegelplatte mit der Trägerstruktur zu vermeiden, können Abstandshalter zwischengelegt werden, welche verhindern, dass die während des Klebevorgangs in das Klebemittel einsinkende Spiegelplatte erst bei direktem Kontakt mit der Trägerstruktur zum Stehen kommt. Eine derartige direkte Kontaktierung soll vermieden werden, um Beschädigungen sowie Beeinträchtigungen der entstehenden Spiegelform zu verhindern. Im Falle der Verwendung eines derartigen Abstandshalters müssen die Kleberaupen eine Mindestdicke aufweisen, so dass sie die Spiegelplatte gleichzeitig stützen und halten können. Da der Spalt zwischen Spiegelplatte und Trägerstruktur durch den Abstandshalter einstellbar ist, kann so die Klebstoffmenge optimiert werden.

Im Zuge der Verklebung von Trägerstruktur und Spiegelplatte wird nunmehr an eine der beiden Teile, bevorzugtermaßen an die Trägerstruktur, eine Schwingung angelegt, welche die Trägerstruktur in Parallelrichtung zur Ebene ihrer Kontaktseite in Schwingungen versetzt. Hierzu können verschiedene Formen der Anregung gewählt werden, so dass es beispielsweise möglich ist, diese mittels eines Exzenters oder auch mithilfe eines hydraulischen Vibrators zu erzeugen.

In Weiterbildung des Klebeverfahrens wird zunächst in einem ersten Schritt die zusammenfügte Trägerstruktur mit ihrer Kontaktseite an einer Mehrzahl von Klebemitteldüsen vorbeigeführt, durch welche hindurch das Klebemittel, vorzugsweise in Form von Klebemittelraupen, auf die Trägerstruktur aufgetragen wird. Es versteht sich, dass zumindest im Bereich der Klebemittelraupen, vorzugsweise aber vollständig die Trägerstruktur vollflächig ausgeführt sein muss, jedoch ist es durchaus möglich, die Trägerstruktur auch außerhalb dieser benötigten Klebepositionen als Gitter oder mit Aussparungen zur Gewichtsreduktion auszuführen.

Nachdem die Klebemittelraupen auf der Kontaktseite der Trägerstruktur appliziert sind, wird die gesamte Trägerstruktur in einer Montagevorrichtung abgelegt. Diese Montagevorrichtung kann beispielsweise regalförmig ausgestaltet sein, so dass mehrere Trägerstrukturen übereinander abgelegt werden können. Auf die Trägerstruktur wird in einem folgenden Schritt die Spiegelplatte zusammen mit ihrer Sollform aufgesetzt und sinkt zumindest aufgrund ihres Eigengewichtes in das Klebemittel ein. Nunmehr wird die Schwingung überlagert, so dass der Einsinkvorgang weiter beschleunigt und erleichtert wird. Das Klebemittel schmiegt sich hierbei an die Trägerstruktur und gleichzeitig die Spiegelplatte an, füllt den Abstand dazwischen gleichzeitig aus und erstarrt nach dem Abklingen der angelegten Schwingung. Nach der vollständigen Erhärtung des Klebemittels ist das Klebeverfahren abgeschlossen.

Die verwendete Schwingung kann innerhalb der Montagevorrichtung auf die Trägerstruktur mit Vorteil vermittels einer einseitigen Halterung angelegt werden, welche die Trägerstruktur in der Montagevorrichtung hält. Gegenüber der einseitigen Halterung liegt die Trägerstruktur hierbei frei in der Montagevorrichtung, um eine Verwindung aufgrund einer beidseitigen Halterung zu vermeiden. Diese könnte dazu führen, dass die Rückstellkräfte nach dem Lösen der zweiten Halterung eine nachträgliche Verwindung der mit der Spiegelplatte verklebten Trägerstruktur bewirken, so dass der entstandene optische Spiegel verzerrt würde. Durch die lediglich einseitige Halterung der Trägerstruktur während des Klebevorgangs wird dieser Effekt verhindert.

Zur Vorbereitung der Spiegelplatte vor einer Verklebung mit der Trägerstruktur wird diese auf einen Montagetisch aufgefädelt, wobei auf eine gemeinsame Sollform auch mehrere Spiegelplatten parallel zueinander aufgezogen werden können. Diese gemeinsame Spiegelanordnung wird dann auch gemeinsam mit einer gemeinsamen Trägerstruktur verbunden.

Die Kontaktierung zwischen Sollform und Spiegelplatte wird vorzugsweise mithilfe eines Vakuums erreicht, wobei der Sollform hierzu Saugelemente zugeordnet sind, welche mithilfe einer Saugpumpe evakuiert werden können. Durch Aussparungen der Sollform hindurch greifen die Saugelemente der unbestückten Sollform in Richtung der Spiegelplatte und saugen sich bei Anlegen eines Vakuums bzw. bei Einschalten einer Saugpumpe an die Oberfläche der Spiegelplatte an. Die Saugelemente sind hierbei mithilfe von Faltenbalgen mit einem Anschlussmittel der Saugpumpe verbunden, welche Faltenbalge sich bei Anlegen des Saugdrucks zusammenziehen und hierbei die Saugelemente durch die Aussparungen der Sollform an die Oberfläche der Sollform heranziehen. Die Spiegelplatte wird hierbei mitgezogen, so dass sich die nicht durch die Aussparungen hindurch ziehbare Spiegelplatte direkt an die vorgegebene Krümmung der Sollform anpasst.

Mit Vorteil weist die Sollform eine stärkere Krümmung auf, als die tatsächlich bei der Herstellung des optischen Spiegels angestrebte Spiegelkrümmung. Nach einem Lösen der Sollform bewirken die Rückstellkräfte der gekrümmten Spiegelplatte ein Öffnen der Krümmung, während die Rückstellkräfte des Klebemittels dies zu verhindern suchen. Es stellt sich ein Gleichgewicht zwischen den Rückstellkräften von Spiegelplatte und Klebemittel ein, nachdem jedoch eine gewisse Relaxation der Spiegelplatte stattgefunden hat. Diese ist im Vorfeld der Bestimmung des Krümmungswinkels zu berücksichtigen.

Die vorstehend beschriebene Erfindung wird im Folgenden anhand eines Ausführungsbeispiels näher erläutert.

Es zeigen
- Figur 1: eine mit mehreren Klebemittelraupen belegte Trägerstruktur in einer perspektivischen Darstellung von schräg oben,
- Figur 2: eine Montagevorrichtung mit eingelegter Trägerstruktur und sich darauf befindlicher, auf eine Sollform aufgezogene Spiegelplatte zu Figur 2 in einer seitlichen Draufsicht
- Figur 3: die Trägerstruktur gemäß Figur 1 mit darauf aufgelegter, auf eine Sollform aufgezogener Spiegelplatte im Moment des Auflegens in einer Querschnittsdarstellung, sowie
- Figur 4: die Trägerstruktur gemäß Figur 3 nach Anlegen einer Schwingung an die Trägerstruktur.

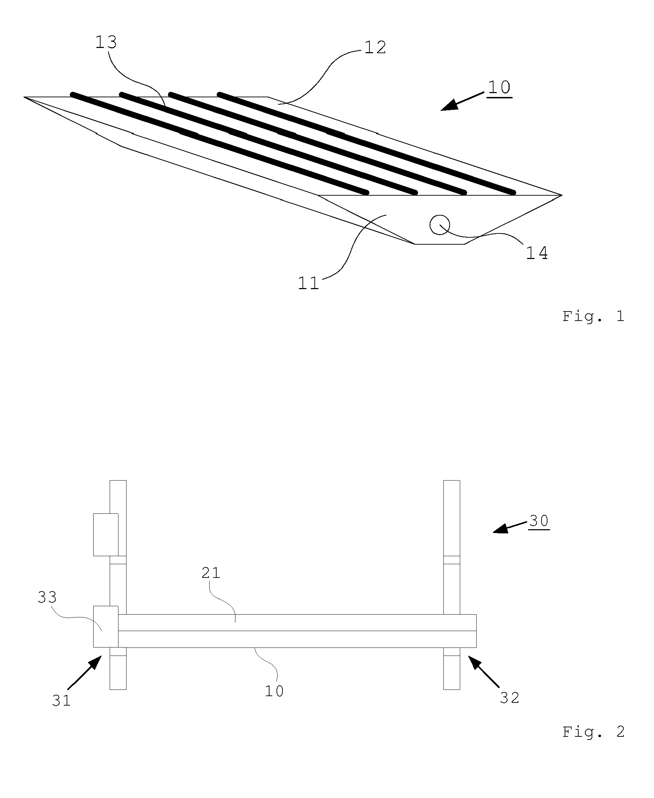

Figur 1 zeigt eine Trägerstruktur 10 zur Herstellung eines optischen Spiegels. Derartige Spiegel können beispielsweise zur Verwendung in linearfokusierenden Solarabsorbern kommen, wobei auf einen mit einem wärmeleitenden Medium durchflossenen Absorber in Form eines langen Rohrs das umliegend auftretende Sonnenlicht konzentriert umgeleitet wird. Für diese Konzentrierung und Umleitung werden Spiegel benötigt, welche eine Fokussierung erlauben, also eine Krümmung aufweisen. Eine Sonnennachführung der optischen Spiegel erfolgt über eine Drehachse 14 der Trägerstruktur 10. Derartige optische Spiegel mit einer individuellen Krümmung, welche vom Winkel der Sonnenstrahlung gleichsam wie von der Position in Bezug auf das Absorberrohr abhängt, können unter Verwendung der Trägerstruktur 10 hergestellt werden. Hierzu wird zunächst die Trägerstruktur 10, welche aus einem in Längserstreckung rechteckigen und im Querschnitt trapezförmigen Kasten aus Aluminiumblech besteht, an einer Mehrzahl von Klebemitteldüsen vorbeigeführt, welche ein thixotropes Klebemittel in Form von Klebemittelraupen 13 auf einer Kontaktseite 12 der Trägerstruktur 10 aufträgt.

Figur 2 zeigt den nächsten Schritt des Kleberverfahrens, wobei die Trägerstruktur 10 in eine regalförmige Montagevorrichtung 30 abgelegt wird. Hierbei wird die Trägerstruktur 10 einseitig mithilfe eines Festlagers 31 gehalten, während die Trägerstruktur 10 auf der gegenüberliegenden Seite auf einem Gleitlager 32 zwängungsfrei aufliegt. Auf der Trägerstruktur 10 wird sodann eine Sollform 21 mit einer darauf aufgezogenen Spiegelplatte 20 platziert, wobei die Sollform 21 die gewünschte Krümmung der Spiegelplatte 20 mehr oder minder vorgibt. Bedarfsweise kann auch die Sollform 21 eine Festlegung aufgrund des Festlagers 21 im Bereich einer einseitigen Halterung der Montagevorrichtung 30 erfahren. Nach dem Aufsetzen der Sollform 21 mit der Spiegelplatte 20 auf die Trägerstruktur 10 unter Zwischenlage des thixotropen Klebemittels wird die Trägerstruktur 10 mithilfe eines hydraulischen Vibrators 33 im Bereich des Festlagers 31 in mechanische Schwingungen versetzt, wobei diese Schwingungen parallel zur Ebene der Kontaktseite 12 der Trägerstruktur 10 stattfinden.

Aufgrund dieser Schwingungen entstehen Scherkräfte in den Klebemittelraupen 13, so dass an den wirkenden Stellen das thixotrope Klebemittel teilweise verflüssigt wird und die mit der Sollform 21 beschwerte und vorgekrümmte Spiegelplatte 20 in Richtung der Trägerstruktur 10 in das Klebemittel einsinkt. Nach der vollständigen Positionierung der Spiegelplatte 20 bezüglich der Trägerstruktur 10 wird die Schwingung abgestellt und das vollständige Erhärten des thixotropen Klebemittels zugewartet. Nach dem Erhärten wird die Sollform 21 von der Spiegelplatte 20 entfernt, wobei die Spiegelplatte 20 sich gegen die Rückstellkraft des nun nicht mehr thixotropen, aber noch elastischen Klebemittels zu entspannen sucht. Es stellt sich ein Gleichgewicht zwischen der Rückstellkraft des Klebemittels und der Rückstellkraft der Spiegelplatte 20 ein, wobei die sich einstellende Krümmung der tatsächlich gewünschten Krümmung des Spiegels entspricht. Demgemäß weist die Sollform 21 eine stärkere Krümmung auf, als dies für den herzustellenden optischen Spiegel vorgesehen ist.

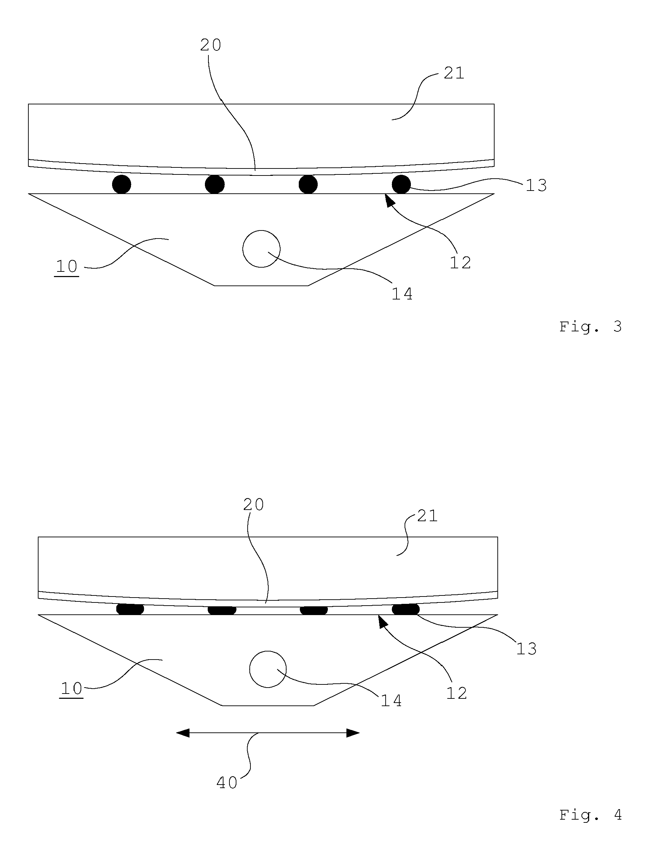

Figur 3 zeigt nochmals in einer Querschnittsdarstellung die Trägerstruktur 10 mit darauf aufgelegter Spiegelplatte 20 und Sollform 21. In einem ersten Augenblick leisten die Klebemittelraupen 13 Widerstand gegen die sich von der Oberseite her aufdrückende Kombination aus Spiegelplatte 20 und Sollform 21, gibt jedoch unter diesem Druck ein Stück weit nach.

In Figur 4 ist dieselbe Situation nochmals dargestellt, wobei hier eine Schwingung 40 angelegt wurde, welche in Form einer Hin- und Herbewegung parallel zu der Kontaktseite 12 der Trägerstruktur 10 angelegt wird. Dies kann etwa über die Drehachse 14 der Trägerstruktur 10 erfolgen. Aufgrund der sich durch die Schwingung 40 der Trägerstruktur 10 einstellenden Bewegung der Kontaktseite 12 und dem Umstand, dass demgegenüber die Sollform 21 mit der darauf aufgezogenen Spiegelplatte 20 als träge Masse dient, wird das dazwischen liegende Klebemittel in Form von sich längs über die Trägerstruktur 10 erstreckenden Klebemittelraupen 13 aufgrund der sich einstellenden Scherkräfte zumindest teilweise verflüssigen, so dass das Einsinken von Sollform 21 und Spiegelplatte 20 in das Klebemittel hinein erleichtert wird. Die Verflüssigung erfolgt jedoch lediglich soweit, dass die Klebemittelraupen 13 weiterhin den Bereich zwischen der Trägerstruktur 10 und der Spiegelscheibe 20 abschnittsweise ausfüllen können. Nach Abschalten der Schwingung 40 bildet sich zunächst die Verflüssigung des thixotropen Klebemittels zurück, nach einer weiteren Zeit ist schließlich das Klebemittel vollständig ausgehärtet. In dieser Situation kann dann die Sollform 21 entfernt werden, woraufhin sich die Spiegelplatte 20 um ein zumindest weitgehend voraus bestimmbares Maß entspannt.

Vorstehend beschrieben ist somit ein Klebeverfahren, welches bekannte Klebeverfahren dahingehend verbessert, dass aufgrund einer Anlegung einer Schwingung und der damit einhergehenden teilweisen Verflüssigung des thixotropen Klebemittels die Herstellungsgeschwindigkeit sowie die Qualität der entstehenden Produkte verbessert wird.

### BEZUGSZEICHENLISTE

- 10: Trägerstruktur
- 11: Gehäuse
- 12: Kontaktseite
- 13: Klebemittelraupe
- 14: Drehachse
- 20: Spiegelplatte
- 21: Sollform
- 30: Montagevorrichtung
- 31: Festlager
- 32: Gleitlager
- 33: hydraulischer Vibrator
- 40: Schwingung

## Patentansprüche

1. Klebeverfahren zur Herstellung von optischen Spiegeln, bei welchem eine verwindungssteife Trägerstruktur (10) eine Kontaktseite (12) aufweist, welche unter Zwischenlage eines thixotropen Klebemittels mit wenigstens einer auf eine Sollform (21) aufgezogenen Spiegelplatte (20) zusammengefügt wird, wobei die Sollform (21) von der wenigstens einen Spiegelplatte (20) gelöst wird, nachdem das Klebemittel erhärtet ist, **dadurch gekennzeichnet, dass** während des Zusammenfügens der wenigstens einen Spiegelplatte (20) mit der Kontaktseite (12) der Trägerstruktur (10) die auf die Sollform (21) aufgezogene Spiegelplatte (20) oder die Trägerstruktur (10) in mechanische Schwingung (40) versetzt wird, welche Schwingung (40) zumindest eine zur Ebene der Kontaktseite (12) parallele Richtungskomponente aufweist.

2. Klebeverfahren gemäß Anspruch 1, **dadurch gekennzeichnet, dass** die auf die Sollform (21) aufgezogene Spiegelplatte (20) in eine zu einer mechanischen Schwingung (40) der Trägerstruktur (10) gegensinnige, vorzugsweise um eine halbe Periodendauer zeitversetzte, mechanische Schwingung versetzt wird.

3. Klebeverfahren gemäß einem der Ansprüche 1 oder 2, **dadurch gekennzeichnet, dass** die Schwingung (40) mit einer Frequenz von zumindest näherungsweise 40 Hz und mit einer Amplitude von zumindest näherungsweise 300 µm, im Falle gegensinniger Schwingungen (40) von Trägerstruktur (10) und auf die Sollform (21) aufgezogener Spiegelplatte (20) von jeweils zumindest näherungsweise 150 µm, angelegt wird.

4. Klebeverfahren gemäß einem der vorhergehenden Ansprüche, **dadurch gekennzeichnet, dass** die für die Klebemittelapplikation vorgesehene Kontaktseite (12) der Trägerstruktur (10), zumindest näherungsweise, vollständig plan ist.

5. Klebeverfahren gemäß Anspruch 4, **dadurch gekennzeichnet, dass** die Trägerstruktur (10) ein, vorzugsweise im Querschnitt zumindest annähernd trapezförmiges und in seiner Längserstreckung rechteckiges, verwindungssteifes Gehäuse (11) ist, welches vorzugsweise aus Stahlblech oder Aluminiumblech hergestellt ist.

6. Klebeverfahren gemäß einem der vorhergehenden Ansprüche, **dadurch gekennzeichnet, dass** zwischen Trägerstruktur (10) und Spiegelplatte (20) ein, vorzugsweise elastischer, Abstandshalter angeordnet wird, welcher eine direkte Kontaktierung der Spiegelplatte (20) mit der Trägerstruktur (10) verhindert.

7. Klebeverfahren gemäß einem der vorhergehenden Ansprüche, **dadurch gekennzeichnet, dass** die Schwingung (40) der Trägerstruktur (10) bzw. der auf die Sollform (21) aufgezogenen Spiegelplatte (20) mittels eines Exzenters oder eines hydraulischen Vibrators (33), oder pneumatisch, elektromechanisch oder piezoelektrisch erzeugt wird.

8. Klebeverfahren gemäß einem der vorhergehenden Ansprüche, **dadurch gekennzeichnet, dass** vor dem Zusammenfügen der auf die Sollform (21) aufgezogenen Spiegelplatte (20) mit der Trägerstruktur (10) letztere mit ihrer Kontaktseite (12) an einer Mehrzahl von Klebemitteldüsen vorbeigeführt wird, wobei die Klebemitteldüsen das thixotrope Klebemittel, vorzugsweise in Form von Klebemittelraupen (13), auf die Trägerstruktur (10) applizieren.

9. Klebeverfahren gemäß einem der vorhergehenden Ansprüche, **dadurch gekennzeichnet, dass** die Trägerstruktur (10) nach der Applikation des Klebemittels in einer, vorzugsweise regalförmigen, Montagevorrichtung (30) abgelegt und die auf die Sollform (21) aufgezogene Spiegelplatte (20) auf die mit dem Klebemittel versehene Kontaktseite (12) der Trägerstruktur (10) aufgesetzt wird.

10. Klebeverfahren gemäß Anspruch 9, **dadurch gekennzeichnet, dass** die Trägerstruktur (10) in der Montagevorrichtung (30) einseitig gehalten ist, wobei vorzugsweise die Schwingung über die einseitige Halterung angelegt wird.

11. Klebeverfahren gemäß einem der vorhergehenden Ansprüche, **dadurch gekennzeichnet, dass** die zumindest eine Spiegelplatte (20) zum Aufziehen auf die Sollform (21) auf einen Montagetisch aufgefädelt wird, die Sollform (21) bezüglich der zumindest einen auf dem Montagetisch aufgefädelten Spiegelplatte (20) positioniert und mit der Spiegelplatte (20) in Kontakt gebracht wird.

12. Klebeverfahren gemäß Anspruch 11, **dadurch gekennzeichnet, dass** die Kontaktierung zwischen Sollform (21) und Spiegelplatte (20) vermittels Anlegen eines Vakuums erfolgt, wobei der Sollform (21) mit einer Saugpumpe verbundene Saugelemente zugeordnet sind.

13. Klebeverfahren gemäß Anspruch 12, **dadurch gekennzeichnet, dass** die Saugelemente durch Aussparungen der Sollform (21) hindurch diese in Richtung der zumindest einen Spiegelplatte (20) durchgreifen und Saugnäpfe zur Kontaktierung der Spiegelplatte (20) aufweisen, welche mithilfe von Faltenbalgen mit Anschlussmitteln der Saugpumpe verbunden sind.

14. Klebeverfahren gemäß einem der vorhergehenden Ansprüche, **dadurch gekennzeichnet, dass** die Sollform (21) eine stärkere Krümmung aufweist, als die im Rahmen der Herstellung des optischen Spiegels angestrebte Spiegelkrümmung.

15. Klebeverfahren gemäß Anspruch 14, **dadurch gekennzeichnet, dass** die Spiegelplatte (20) sich nach einem Lösen der Sollform (21) von der Spiegelplatte (20) in Richtung der angestrebten Spiegelkrümmung gegen den Widerstand des erhärteten Klebemittels so weit entspannt, bis sich ein Gleichgewicht zwischen den Rückstellkräften von Klebemittel und Spiegelplatte (20) einstellt.

## Geänderte Patentansprüche

### Geänderte Patentansprüche gemäss Regel 137(2) EPÜ.

**1.** Klebeverfahren zur Herstellung von optischen SpiegeIn, bei welchem eine verwindungssteife Trägerstruktur (10) eine Kontaktseite (12) aufweist, welche unter Zwischenlage eines thixotropen Klebemittels mit wenigstens einer auf eine Sollform (21) aufgezogenen, gekrümmten Spiegelplatte (20) zusammengefügt wird, wobei die Sollform (21) von der wenigstens einen Spiegelplatte (20) gelöst wird, nachdem das Klebemittel erhärtet ist, **dadurch gekennzeichnet, dass** während des Zusammenfügens der wenigstens einen Spiegelplatte (20) mit der Kontaktseite (12) der Trägerstruktur (10) die auf die Sollform (21) aufgezogene Spiegelplatte (20) oder die Trägerstruktur (10) unter Vermeidung einer räumlichen Relativverschiebung der Spiegelplatte (20) in Bezug auf die Trägerstruktur (10) und unter Verflüssigung eines jeweils druck- und/oder scherbeanspruchten Teils des thixotropen Klebemittels derart in mechanische Schwingung (40) versetzt wird, dass eine weitgehend exakte Abbildung der gekrümmten Spiegelscheibe in das Klebemittel übertragen wird, wobei die Schwingung (40) zumindest eine zur Ebene der Kontaktseite (12) parallele Richtungskomponente aufweist.

**2.** Klebeverfahren gemäß Anspruch 1, **dadurch gekennzeichnet, dass** die auf die Sollform (21) aufgezogene Spiegelplatte (20) in eine zu einer mechanischen Schwingung (40) der Trägerstruktur (10) gegensinnige, vorzugsweise um eine halbe Periodendauer zeitversetzte, mechanische Schwingung versetzt wird.

**3.** Klebeverfahren gemäß einem der Ansprüche 1 oder 2,
**dadurch gekennzeichnet, dass** die Schwingung (40) mit einer Frequenz von zumindest näherungsweise 40 Hz und mit einer Amplitude von zumindest näherungsweise 300 µm, im Falle gegensinniger Schwingungen (40) von Trägerstruktur (10) und auf die Sollform (21) aufgezogener Spiegelplatte (20) von jeweils zumindest näherungsweise 150 µm, angelegt wird.

**4.** Klebeverfahren gemäß einem der vorhergehenden Ansprüche, **dadurch gekennzeichnet, dass** die für die Klebemittelapplikation vorgesehene Kontaktseite (12) der Trägerstruktur (10), zumindest näherungsweise, vollständig plan ist.

**5.** Klebeverfahren gemäß Anspruch 4, **dadurch gekennzeichnet, dass** die Trägerstruktur (10) ein, vorzugsweise im Querschnitt zumindest annähernd trapezförmiges und in seiner Längserstreckung rechteckiges, verwindungssteifes Gehäuse (11) ist, welches vorzugsweise aus Stahlblech oder Aluminiumblech hergestellt ist.

**6.** Klebeverfahren gemäß einem der vorhergehenden Ansprüche, **dadurch gekennzeichnet, dass** zwischen Trägerstruktur (10) und Spiegelplatte (20) ein, vorzugsweise elastischer, Abstandshalter angeordnet wird, welcher eine direkte Kontaktierung der Spiegelplatte (20) mit der Trägerstruktur (10) verhindert.

**7.** Klebeverfahren gemäß einem der vorhergehenden Ansprüche, **dadurch gekennzeichnet, dass** die Schwingung (40) der Trägerstruktur (10) bzw. der auf die Sollform (21) aufgezogenen Spiegelplatte (20) mittels eines Exzenters oder eines hydraulischen Vibrators (33), oder pneumatisch, elektromechanisch oder piezoelektrisch erzeugt wird.

**8.** Klebeverfahren gemäß einem der vorhergehenden Ansprüche, **dadurch gekennzeichnet, dass** vor dem Zusammenfügen der auf die Sollform (21) aufgezogenen Spiegelplatte (20) mit der Trägerstruktur (10) letztere mit ihrer Kontaktseite (12) an einer Mehrzahl von Klebemitteldüsen vorbeigeführt wird, wobei die Klebemitteldüsen das thixotrope Klebemittel, vorzugsweise in Form von Klebemittelraupen (13), auf die Trägerstruktur (10) applizieren.

**9.** Klebeverfahren gemäß einem der vorhergehenden Ansprüche, **dadurch gekennzeichnet, dass** die Trägerstruktur (10) nach der Applikation des Klebemittels in einer, vorzugsweise regalförmigen, Montagevorrichtung (30) abgelegt und die auf die Sollform (21) aufgezogene Spiegelplatte (20) auf die mit dem Klebemittel versehene Kontaktseite (12) der Trägerstruktur (10) aufgesetzt wird.

**10.** Klebeverfahren gemäß Anspruch 9, **dadurch gekennzeichnet, dass** die Trägerstruktur (10) in der Montagevorrichtung (30) einseitig gehalten ist, wobei vorzugsweise die Schwingung über die einseitige Halterung angelegt wird.

**11.** Klebeverfahren gemäß einem der vorhergehenden Ansprüche, **dadurch gekennzeichnet, dass** die zumindest eine Spiegelplatte (20) zum Aufziehen auf die Sollform (21) auf einen Montagetisch aufgefädelt wird, die Sollform (21) bezüglich der zumindest einen auf dem Montagetisch aufgefädelten Spiegelplatte (20) positioniert und mit der Spiegelplatte (20) in Kontakt gebracht wird.

**12.** Klebeverfahren gemäß Anspruch 11, **dadurch gekennzeichnet, dass** die Kontaktierung zwischen Sollform (21) und Spiegelplatte (20) vermittels Anlegen eines Vakuums erfolgt, wobei der Sollform (21) mit einer Saugpumpe verbundene Saugelemente zugeordnet sind.

**13.** Klebeverfahren gemäß Anspruch 12, **dadurch gekennzeichnet, dass** die Saugelemente durch Aussparungen der Sollform (21) hindurch diese in Richtung der zumindest einen Spiegelplatte (20) durchgreifen und Saugnäpfe zur Kontaktierung der Spiegelplatte (20) aufweisen, welche mithilfe von Faltenbalgen mit Anschlussmitteln der Saugpumpe verbunden sind.

**14.** Klebeverfahren gemäß einem der vorhergehenden Ansprüche, **dadurch gekennzeichnet, dass** die Sollform (21) eine stärkere Krümmung aufweist, als die im Rahmen der Herstellung des optischen Spiegels angestrebte Spiegelkrümmung.

**15.** Klebeverfahren gemäß Anspruch 14, **dadurch gekennzeichnet, dass** die Spiegelplatte (20) sich nach einem Lösen der Sollform (21) von der Spiegelplatte (20) in Richtung der angestrebten Spiegelkrümmung gegen den Widerstand des erhärteten Klebemittels so weit entspannt, bis sich ein Gleichgewicht zwischen den Rückstellkräften von Klebemittel und Spiegelplatte (20) einstellt.
